# EUROPEAN PATENT APPLICATION

(11) **EP 1 927 291 A1**
(43) Date of publication of application: **04.06.2008**
(21) Application number: 07114202.0
(22) Date of filing: 10.08.2007
(51) Int. Cl.: A23K 1/02, A23K 1/08, A23K 1/16

(54) **Manufacture of animal feed supplements**

(30) Priority: 28.11.2006 GB 0623716
(71) Applicant: Carrs Agriculture Limited, Wigton, Cumbria, CA7 4AJ (GB)
(72) Inventor: Atherton, Edward, Wigton, Cumbria CA7 8NH (GB); Lister, Clifford James, Wigton, Cumbria CA7 0JQ (GB)
(74) Representative: Manley, Nicholas Michael

(57) **Abstract**

An animal feed supplement comprising an at least partially vitrified carrier material composition containing one or more additives, wherein the carrier material composition comprises either: one or more carbohydrate-containing materials from the group comprising: condensed molasses solubles (CMS), apple molasses, pot ale syrup and whey products; or two or more carbohydrate-containing materials from the group comprising: CMS sugar cane molasses, sugar beet molasses, apple molasses, pot ale syrup and whey products.

## Description

The present invention relates to the manufacture of animal feed supplements, and in particular to a method and apparatus for processing carbohydrate-based foodstuffs, into animal feed supplements.

Molasses is widely used as a basis for animal feed supplements. One method of manufacture of molasses based animal feed supplements involves heating raw molasses to reduce the water content and to crystallise the sugars within the molasses. If the molasses is heated to the correct temperature for the correct period of time and subsequently cooled at the correct rate, a hard glass like crystalline block is formed upon cooling. If additives (e.g. vitamins, minerals or pharmaceuticals) are added and mixed with the heated molasses before solidification occurs, the glassy block of molasses, when cooled, serves as a carrier for the additives whilst also serving to regulate their dispensation. When an animal licks the block, its saliva dissolves the carrier to enable some of the additives to be consumed. Although pleasant, the animal eventually tires of licking, thereby regulating the amount of additive ingested. Furthermore, because liquid (e.g. saliva or rainwater) can only penetrate a short distance into the surface of the glass like block, dissolution of the block is rate limited and hence predictable over time.

For these reasons, animal feed supplements based on composite foodstuffs are extremely convenient to use and are becoming increasingly popular amongst farmers for administering regulated quantities of additives, such as nutraceuticals, vitamins, minerals or proteins, to livestock over a period of time.

A known method of producing an animal feed supplement involves blending the molasses with a vegetable oil and to heat the mixture in a vat. Heating takes place causing water to be removed by evaporation whilst simultaneously inducing chemical changes in sugar chemistry (e.g. sugar cracking) to cause the mixture to become hard and glass like upon cooling. After heating to the desired temperature, the mixture is transferred to a vacuum vessel where drying and cooling takes place under vacuum conditions (i.e. at a pressure lower than atmospheric pressure) to ensure that as much water as possible is removed from the mixture. When the temperature of the molasses has fallen to a value at which the additives will not be damaged, the desired additives are blended with the mixture to create a desired feed supplement composition. The warm mixture, which has a dough like consistency, is then dispensed into containers, whereupon it is allowed to cool and solidify into the glass like blocks as described previously.

A problem with known molasses-based feed supplements is the volatility in the supply of raw molasses. Further, as sugar processing techniques evolve over time, the sugar content of the molasses, being a by-product of sugar manufacture, is decreasing. It is therefore doubtful whether a reliable supply of relatively high-sugar content molasses will continue to be available.

Further problems with the known methods of manufacturing animal feed supplements include:
- The large amount of fuel required to heat the mixture.
- The lead-time of the process, which is rate-limited by the rate of evaporation of liquids.
- The fact that the vapours extracted during the drying phase contain volatile materials and have an unpleasant odour, which environmental legislation requires to be removed using expensive and energy-inefficient methods before the vapours can be vented to atmosphere.
- Temperature sensitive additives can only be added at lower temperature stages of the process, which adds to machine complexity and control problems.
- The vigorous nature of the heating process and high temperatures cause loss of particulate matter in the air stream, and the chemical changes in the complex sugar profile causes sugar loss of about two to eight percent.

It is an object of the invention to overcome one or more of the above problems.

This invention aims to address one or more of the above problems, and to provide an improved, or an alternative, animal feed supplement.

A first aspect of the invention provides an animal feed supplement comprising an at least partially vitrified carrier material composition containing one or more additives, wherein the carrier material composition comprises one or more carbohydrate-containing materials from the group comprising: condensed molasses solubles (CMS), apple molasses, pot ale syrup and whey products.

A second aspect of the invention provides an animal feed supplement comprising an at least partially vitrified carrier material composition containing one or more additives, wherein the carrier material composition comprises two or more carbohydrate-containing materials from the group comprising: condensed molasses solubles (CMS) sugar cane molasses, sugar beet molasses, apple molasses, pot ale syrup and whey products.

Preferably the carrier material comprises sugar cane molasses or sugar beet molasses and one or more of the group comprising CMS, apple molasses, pot ale syrup and whey products.

The additives can be any one or more of the group comprising: a vitamin, a mineral, a protein, a flavouring, a colourant, and a preservative.

An advantage of the invention is that the cane or beet molasses can be substituted, either completely, or in part, by one or more materials.

Preferred embodiments and mixtures could include, but are not restricted to, the following;
Cane and/or beet molasses and condensed molasses solubles (CMS) at variable ratios, a preferred ratio being 70% cane and/or beet molasses and 30% CMS (+/- 5%).
Apple molasses and cane or beet molasses at variable ratios, a preferred ratio being 100% apple molasses and 0% cane and/or beet molasses (+/- 5%).
Cane and/or beet molasses and pot ale syrup at variable ratios, preferred ratios being 53% cane and/or beet molasses and 47% pot ale syrup (+/-5%), or 47% cane and/or beet molasses and 53% pot ale syrup (+/-5%).
Cane and/or beet molasses, pot ale syrup and ground wheat at variable ratios, a preferred ratio being 33% cane and/or beet molasses, 50% pot ale syrup and 17% ground wheat (+/- 5%).
Cane and/or beet molasses and whey products at variable ratios, a preferred ratio being 70% cane and/or beet molasses and 30% whey products (+/- 5%). A preferred whey product comprises Molkekinzentrat 45.

Various properties of the substitute materials (i.e. CMS, apple molasses, pot ale syrup, and whey products) are as follows:
CMS has a high dry matter (DM) and protein content. Apple molasses is a by-product of pectin production, having a high DM and sugar content and a low ash content. Ground wheat is readily available and has a high DM, starch and energy content. It also contains very little ash. To prevent the starch from gelling, it is sometimes necessary to hydrolyse the starch using enzymes. Whey products, in particular Molkekinzentrat 45, is an extremely cheap raw material having a high sugar (lactose) content, and hence high metabolisable energy (ME) content.

The substitute materials can be obtained as by-products of other industrial processes, (e.g. cider making, brewing, liquor distillation, pectin production etc). These by-products currently have limited uses, and demand for these materials is therefore relatively low, hence the environmental and economic cost associated with disposal of excess material can be relatively high. The invention may therefore provide an alternative to disposal or destruction of these materials by enabling them to be re-cycled or re-used.

A third aspect of the invention provides a method of manufacturing an animal feed supplement comprising the steps of: feeding a carbohydrate-containing fluid composition comprising any one or more of the group comprising: CMS, apple molasses, pot ale syrup, and whey products, into a first vessel, heating the composition and simultaneously at least partially evacuating the vessel, cooling the composition and allowing the composition to harden.

A fourth aspect of the invention provides a method of manufacturing an animal feed supplement comprising the steps of: feeding a carbohydrate-containing fluid composition comprising any two or more of the group comprising: CMS, sugar cane molasses, sugar beet molasses, apple molasses, pot ale syrup, and whey products, into a first vessel, heating the composition and simultaneously at least partially evacuating the vessel, cooling the composition and allowing the composition to harden.

The heating step preferably involves raising the temperature of the composition to above a point where chemical changes take place therein.

The use of a vacuum in the processing of carbohydrate-containing liquids is contraindicated in the prior art, largely because a reaction can occur at elevated temperatures, which can cause the composition to suddenly boil-over or foam, which can cause the heating vessel to become unstable and potentially dangerous (e.g. be damaged or explode). Advantageously, the invention may allow the composition to be cooked at lower temperatures and with less vigorous reactions.

The vacuum is preferably applied using a vacuum system. The vacuum system, where provided, may comprise a vacuum pump, which is ideally a liquid ring vacuum pump, a shell and tube heat exchanger and water tank with separate cooling water flow for the pump, and a condenser with separate cooling water loop. Heating of the composition may be achieved using an oil heater or gas-powered heater to generate steam or to heat thermal fluid, which is preferably circulated through jacketed vessels. The method preferably involves evaporating a significant portion of the moisture resident in the composition and removing the resulting vapour from the vessel. The vapour, once removed, is preferably condensed using a condenser.

A second stage cooling step is preferably also provided during which heat and further excess moisture is extracted from the composition, which may cause the composition to achieve a desired viscosity. In a most preferred embodiment of the invention, the cooling step involves the rapid extraction of heat from the composition, e.g. by quickly transferring the composition into a second vessel maintained at a lower temperature, i.e. a cooler vessel.

The second vessel, where provided, may have means (e.g. a vacuum system) associated therewith for reducing the pressure therein during the cooling step.

The cooling step may additionally comprise a further evaporation step, again using a vacuum system, to evaporate a portion of the composition, e.g. the water portion.

Once processed, the composition is preferably dispensed into a dump tank.

One or more additives are preferably blended into the composition at some point in the process. Blending may be achieved by any suitable means, although it is envisaged that a motor-driven screw blender would be used.

The one or more additives may be of the group comprising a vitamin, a mineral, a protein, flavouring, a colourant, a preservative and a different composition.

Once processed, the composition is preferably dispensed into a container or containers. Dispensing may be accomplished using an extruder.

The composition may be agitated at any or all stages of the process. An agitator, in the form of an impeller driven by a motor may be provided for this purpose.

A fifth aspect of the invention provides an apparatus for manufacturing an animal feed supplement comprising a first vessel and means for feeding a carbohydrate-containing fluid composition into the first vessel, means for heating and means for applying a vacuum to the composition in the first vessel, wherein the carbohydrate-containing fluid composition comprises any one or more of the group comprising: CMS, apple molasses, pot ale syrup, and whey products.

A sixth aspect of the invention provides an apparatus for manufacturing an animal feed supplement comprising a first vessel and means for feeding a carbohydrate-containing fluid composition into the first vessel, means for heating and means for applying a vacuum to the composition in the first vessel, wherein the carbohydrate-containing fluid composition comprises any two or more of the group comprising: CMS, sugar cane molasses, sugar beet molasses, apple molasses, pot ale syrup, and whey products.

In practice, the vessel is likely to require a pressure release system that prevents the pressure within the vessel exceeding a predetermined threshold. An increase in pressure may occur where the composition suddenly boils over due to chemical changes in the materials, as sometimes happens when sugars are heated. One possible pressure release system comprises a vessel overflow outlet conduit through which the composition can be discharged when the pressure within the vessel exceeds the predetermined threshold. The outlet conduit may comprise a barometric seal to maintain vacuum pressures.

Inlet valves and outlet valves may be provided for filling and/or emptying the vessel and conduits, and pipes or chutes may be provided for conveying the composition through the process.

The method and/or apparatus are ideally, although not essentially, computer-controlled. The computer, where provided may control the operation of any of the components of the process. Sensors may also be provided for monitoring the process and/or apparatus. Such sensors may include temperature sensors, weight sensors, strain gauges, pressure/vacuum sensors etc.

Envisaged advantages of the invention include:
- Reducing the boiling point proportionate to the level of vacuum created, which may allow the flexibility to either:
   o Heat to the desired temperature in a shorter time period (thus improving throughputs substantially and decreasing utility costs per tonne of product); or
   o Remove the same volume of moisture from the composition at lower temperatures (thus delivering a cost saving in terms of fuel consumption).
   o Prevent sugar loss of about two to eight percent by less vigorous vessel activity and chemical sugar conversion.
- Reducing fuel consumption, which is likely to have a positive impact on carbon emissions.
- Whereas the prior art atmospheric cooking process produces saturated steam at up to 0.01 m³ s⁻¹, which contains significant volumes of odorous compounds, including hydrocarbons and metacarbons, (which under current legislation must not be emitted to atmosphere and require significant capital expenditure and further utility usage to ensure compliance), the vacuum cooking process removes this odour nuisance without substantial capital expenditure and without the running costs of associated equipment currently used, by condensing all the steam during the vacuum cooking process.

A seventh aspect of the invention provides an animal feed supplement comprising an at least partially vitrified carrier material composition containing one or more additives, wherein the carrier material composition comprises one or more carbohydrate-containing materials from the group comprising: condensed molasses solubles (CMS), apple molasses, pot ale syrup and whey products.

The carrier material composition may further comprise sugar cane molasses, and/or sugar beet molasses.

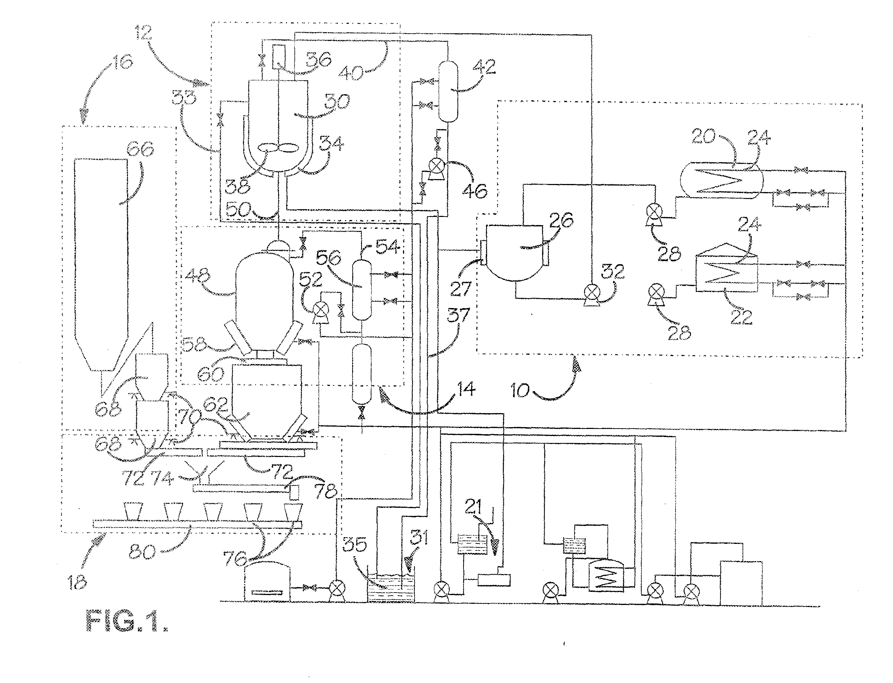

A preferred embodiment of the invention shall now be described, by way of example only, with reference to the accompanying drawing, Figure 1, which shows a schematic system diagram of an embodiment of the manufacture of animal feed supplements in accordance with the invention.

Referring to Fig. 1, in very general terms the illustrated arrangement is intended to feed the carbohydrate-containing fluid composition sequentially from a storage and premix stage 10 to a heating stage 12 where the mixture is heated under vacuum conditions, a cooling and drying stage 14 where the mixture is cooled whilst vapours are removed, a blending stage 16 where additives are admixed and blended with the carrier material and a dispensing stage 18 where the final product (comprising the mixture and additives) is dispensed into containers and is then allowed to solidify, to produce a glass like block upon cooling to ambient temperatures.

The storage and premix stage 10 comprises one or more storage vessels 20, 22 in which raw materials, such as CMS;, sugar cane molasses, sugar beet molasses, apple molasses, pot ale syrup, and/or whey products and a vegetable oil (e.g. palm oil) are stored separately. The vessels 20, 22 may be heated using pipes 24 through which hot water flows, in order to keep the materials in a flowable state. The raw materials are pumped by means of pumps 28 into a premix vessel 26. The premix comprises a fluid feed composition typically containing 40-100% of one or more of the materials; CMS, sugar cane molasses, sugar beet molasses, apple molasses, pot ale syrup and/or whey products; depending upon their sugar content, with the balance being made up of other foodstuffs, which may include vegetable oils and/or protein sources.

A desired amount of the premixed material is then transferred from the premix vessel to a heating vessel 30 of the heating stage 12 by means of a pump 32. The heating vessel 30 is heated using a vessel jacket 34 that is fed with hot oil from a boiler 21. The batch of material within the heating vessel 12 is continuously stirred using an impeller 38 driven by an electric motor 36. Heating the material above boiling point within the heating vessel 30 causes water to be expelled therefrom in the form of steam, which is extracted from the heating vessel 30 via a steam exhaust pipe 40 and condensed back into water in a condenser 42.

A vacuum pump 46 of the fluid ring type communicates with the heating vessel 12 via the steam exhaust pipe 40, which serves primarily to reduce the pressure in the heating vessel 30 as well as acting as a backing pump for the condenser 42.

The heating stage involves heating the carrier material in a vessel to 90-125°C, for 30-150 minutes whilst maintaining a pressure in the vessel that is lower than atmospheric pressure. The pressure within the vessel can be anywhere between 1000mbar and 100mbar on a vacuum pressure gauge.

The material mix is continuously agitated during heating by means of the agitator 38.

A pressure release system 31 to minimise damage in the event that the mixture within the heating vessel 30 suddenly boils over is provided. The pressure release system comprises an outlet conduit 33, the upper end of which is connected to the sidewall of the heating vessel, above the normal level of mixture within the vessel, and the lower end of which is immersed in a bath of water 35, which creates a barometric seal. A second conduit 37 is also provided, its lower end also being immersed in the bath of water 35 and its upper end being connected to the condenser 42. If the depth to which the end of the conduits 33, 37 are immersed in the column of water is the head of water equivalent to the vacuum applied, the vacuum integrity of the vessel 30 is not broken or degraded. However, in the event of a rapid expansion of the composition, the pressure in the vessel 30 will be increased, thereby raising the pressure in the backing conduit 37, enabling excess composition to be vented down the outlet conduit 33.

The heating stage of the process is designed to drive off the major proportion of the water content in the composition whilst inducing chemical changes (e.g. cracking) in the sugars present in the premixed feed composition, which is critical to produce the glass like finished block.

After having been heated, the mixture is transferred from the heating vessel 12 via a transfer pipe 50 to a second vacuum vessel 48, which forms part of the cooling and drying stage 14. The second vacuum vessel 48 is also held under vacuum using a liquid ring vacuum pump 52, which serves to continue the removal of moisture from the carrier material. Water vapour is extracted from the second vacuum vessel 48 via a second steam exhaust pipe 54 before being condensed in a second condenser 56 (which is also connected to the vacuum pump 46).

Optionally, whilst in the second vacuum vessel 48, the mixture can be stirred using a motor-driven impeller (not shown).

The temperature of the carrier material in the second vacuum vessel 48 is regulated using a water jacket 58 which receives heated water to prevent the carrier material within from solidifying or becoming too viscous. Once the desired water content has been attained, a slide valve 60 is opened allowing the material to drop into a dump tank 62. The dump tank 62 is also warmed using a water jacket 64 to prevent the material from solidifying or becoming too viscous.

The cooling and drying stage 14 consists of reducing the pressure in the second vacuum vessel to below atmospheric pressure to further reduce the moisture content, for between 10 and 30 minutes whilst cooling the carrier material to ~50-75°C. The pressure in the vessel can be anywhere between 170mbar and 35mbar on a vacuum pressure gauge.

The next stage 16 in the process involves blending additives into the treated material to form a composite composition. The blending stage comprises a silo 66 in which additives are stored. (One silo 66 is shown, although several may be provided, depending on the additives to be incorporated). The additives are mixed in mixing vessels 68 before being blended with the carrier material using screws disposed within each silo.

Advantageously, the process enables a high-temperature reaction to be initiated in the cooking vessel whilst not damaging the additives, which are added later on - at a lower temperature stage of the process.

The dump tank 62 and the mixing vessels 68 are continuously weighed using electronic load cells 70 so that the composition of the final composite composition can be continuously monitored analysed and/or corrected if needed.

Final blending takes place using a pair of intermeshing Archimedean screws 72. The blended composite composition is then fed into a hopper 74 before being dispensed into containers 76 using an extruder 78. The containers 76 pass stepwise beneath the extruder 78 on a conveyor belt 80 and the extruder is arranged to dispense a predetermined volume of product into each container as it rests temporarily beneath the extruder.

As previously stated, an advantage of heating the mixture under vacuum conditions is that the heating stage can be carried out at reduced temperature (or that less heat is required to achieve the same temperature). This means that the blending of heat-sensitive additives is now possible at the premix stage, where before they would have been deactivated or degraded by the cooking stage.

The composite composition, when dispensed into containers 76 cools to ambient temperature (~20°C) and forms a solid hard crystalline, glass like feed block.

Various animal feed supplements in accordance with the invention have been successfully manufactured. The following are comments regarding the manufacture of these compositions. (All comparisons are relative to method of a manufacture of a pure cane or beet molasses animal feed supplement):
Molasses : CMS blend (70:30) mixture

The initial moisture content of this composition is around 2% greater than pure cane molasses and requires a higher cook temperature If the cooking temperature is increased by approximately 1.5°C, very similar cook times can be achieved. The molasses-CMS blend mixture appears to produce a good alternative to pure cane molasses and seems to have no significant additional processing problems.

### Apple Molasses (100:0)

A slightly longer cook time is required due to slightly lower dry matter (DM) A slightly elevated cook temperature is required (+4-5°C). The final product has excellent properties and is consumed by test animals in very similar volumes to a conventional molasses-based feed supplement.

### Molasses : Pot Ale Syrup (53 : 47)

A much longer cook time (120 minutes versus 90 minutes) is required due to a higher initial moisture content (+50%). An acceptable finished product can be obtained, however, and is consumed by test animals in very similar volumes to a conventional molasses-based feed supplement.

### Molasses : Pot Ale Syrup (45:55)

A very long cook time (3 hr 12 min) at 116°C is required. The finished product has a very rubbery and plasticized texture.

### Molasses : Pot Ale : Wheat (33.50:17)

A satisfactory product can be produced by cooking at 114.4°C. However the agitators drew 17A of current (compared to 10A).
Molasses : Pot Ale: Wheat (33.50:17) + enzymes

The addition of alpha amylase enzymes had no impact on reducing the anticipated gelling/viscosity problems. The maximum cooker temperature achievable was 107°C before the agitator drew too high a current to be safe. The finished product had a higher than normal residual moisture content, which gave it a fudge-like, rather than a glassy consistency. A more glass-like end product can be obtained by using a more heat stable alpha amylase with extremely fast viscosity breaking properties.

By substituting pure cane or beet molasses for alternative raw materials, significant cost savings have been shown to be achievable. At current market rates, the relative cost of manufacturing animal feed supplements in accordance with the invention, compared to animal feed supplements manufactured using pure molasses, are as follows:

| **Ingredients** | **Ratio** | **Relative cost (c.f. 100% molasses)** |
|---|---|---|
| Control (molasses) | 100:0 | 1 |
| Molasses : CMS | 70:30 | 0.94 |
| Apple molasses | 100:0 | 1 |
| Molasses : pot ale | 53:47 | 0.92 |
| Molasses : pot ale | 45:55 | 0.91 |
| Molasses : pot ale : wheat + enzymes | 33:50:17 | 0.90 |
| Molasses: Molkekonzentrat | 70:30 | 0.94 |

The invention is not restricted to the details of the foregoing embodiment, for example:

Instead of palm oil, other oils or substances can be used, such as maize oil or any other vegetable oil. Instead of molasses, any other carbohydrate-containing substance may be used, such as sugar or syrup or mixtures thereof.

The process parameters can be adjusted to suit particular applications. Variable process parameters include the composition of the composition (i.e. the make-up of the premix and the amount of and type of additives), the processing temperatures, the processing times and the vacuum levels.

## Claims

1. An animal feed supplement comprising an at least partially vitrified carrier material composition containing one or more additives, wherein the carrier material composition comprises one or more carbohydrate-containing materials from the group comprising: condensed molasses solubles (CMS), apple molasses, pot ale syrup and whey products.

2. An animal feed supplement as claimed in claim 1, wherein the carrier material composition further comprises sugar cane molasses, and/or sugar beet molasses.

3. An animal feed supplement as claimed in claim 1 or claim 2, wherein the additives are any one or more of the group comprising: a vitamin, a mineral, a protein, a flavouring, a colourant, and a preservative.

4. An animal feed supplement as claimed in any of claims 1, 2 or 3, wherein the carrier material comprises between 50% and 75% molasses, the balance being condensed molasses solubles.

5. An animal feed supplement as claimed in any of claims 1. 2 or 3, wherein the carrier material comprises upwards of 50% apple molasses, the balance being molasses.

6. An animal feed supplement as claimed in any of claims 1, 2 or 3, wherein the carrier material comprises between 41% and 75% molasses, the balance being pot ale syrup.

7. An animal feed supplement as claimed in any of claims 1, 2 or 3, wherein the carrier material comprises between 25% and 60% whey products, the balance being molasses.

8. A method of manufacturing an animal feed supplement comprising the steps of: feeding a carbohydrate-containing fluid composition comprising any one or more of the group comprising: CMS, apple molasses, pot ale syrup, and whey products, into a first vessel, heating the composition and simultaneously at least partially evacuating the vessel, cooling the composition and allowing the composition to harden.

9. A method as claimed in claim 8, wherein the carbohydrate-containing fluid composition further comprises sugar cane molasses, and/or sugar beet molasses.

10. A method according to claim 8 or claim 9 of manufacturing an animal feed supplement according to any of claims 1 to 7.

11. A method as claimed in any of claims 8, 9 or 10, wherein the method involves vaporising at least a portion of the water content of the liquid composition.

12. A method as claimed in claim 11, further comprising the step of removing at least some of the water vapour from the vessel.

13. A method as claimed in claim 12, further comprising the step of condensing at least some of the water vapour.

14. A method as claimed in any of claims 8 to 13, wherein heating of the composition comprises at least partial dehydration of the composition.

15. A method as claimed in any of claims 8 to 14, wherein cooling the composition comprises dispensing the composition into a second vessel, the second vessel being held at a lower temperature than the first vessel.

16. A method as claimed in any of claims 8 to 15, wherein cooling of the composition comprises at least partial dehydration of the composition.

17. A method as claimed in any of claims 8 to 16, further comprising the step of increasing the vacuum applied to the first vessel and/or the second vessel.

18. A method as claimed in any one of claims 8 to 17, wherein cooling the composition comprises vaporising at least a portion of the water content of the composition in the second vessel.

19. A method as claimed in claim 18, further comprising the step of removing at least some of the vapour from the second vessel.

20. A method as claimed in claim 19, further comprising the step of condensing at least some of the water vapour removed from the second vessel.

21. A method as claimed in any of claims 8 to 20, further comprising the step of dispensing the composition into a dump tank.

22. A method as claimed in any of claims 8 to 20, further comprising the step of agitating the composition.

23. A method as claimed in any of claims 8 to 22, further comprising the step of blending an additive into the composition.

24. A method as claimed in any of claims 8 to 23, further comprising the step of dispensing the composition into a container.

25. An apparatus for manufacturing an animal feed supplement comprising a first vessel and means for feeding a carbohydrate-containing fluid composition into the first vessel, means for heating and means for applying a vacuum to the composition in the first vessel, wherein the carbohydrate-containing fluid composition comprises any one or more of the group comprising: CMS, apple molasses, pot ale syrup, and whey products.

26. An apparatus as claimed in claim 25, wherein the carbohydrate-containing fluid composition further comprises sugar cane molasses, and/or sugar beet molasses.

27. An apparatus as claimed in claim 25 or claim 26, wherein the means for applying a vacuum comprises a vacuum pump.

28. An apparatus as claimed in claim 27, wherein the vacuum pump is a liquid ring vacuum pump.

29. An apparatus as claimed in 27 or claim 28, wherein the vacuum pump has an exhaust and a filter means on the exhaust.

30. An apparatus as claimed in one of claims 26 to 29, wherein the means for applying a vacuum comprises a condenser.

31. An apparatus as claimed in any one of claims 26 to 30, further comprising an agitator for agitating the composition.

32. An apparatus as claimed in claim 31, wherein the agitator comprises an impeller.

33. An apparatus as claimed in any one of claims 26 to 32, wherein the first vessel has a pressure release system that prevents the pressure within the vessel exceeding a predetermined threshold.

34. An apparatus as claimed in claim 33, wherein the pressure release system comprises an outlet conduit through which the composition can be discharged when the pressure within the vessel exceeds the predetermined threshold.

35. An apparatus as claimed in claim 33 or claim 34, wherein the pressure release system comprises a barometric seal.

36. An apparatus as claimed in any one of claims 26 to 35, further comprising a computer for controlling the operation of any one or more of the group comprising; a means for feeding; a means for heating; a means for applying a vacuum; a condenser; an agitator and a valve.

37. An apparatus as claimed in any one of claims 26 to 35, further comprising a blender for blending an additive into the composition.

38. An apparatus as claimed in claim 37, wherein the blender comprises a screw.

39. An apparatus as claimed in any one of claims 26 to 38, further comprising a dispenser for dispensing the animal feed supplement into a container.
